# EUROPEAN PATENT APPLICATION

(11) **EP 3 812 077 A2**
(43) Date of publication of application: **28.04.2021**
(21) Application number: 20203451.8
(22) Date of filing: 22.10.2020
(51) Int. Cl.: B23K 26/03, B23K 26/0622, B23K 26/082, B23K 26/361

(54) **METHOD AND APPARATUS FOR DEBURRING WORKPIECES**

(30) Priority: 22.10.2019 ES 201930933
(71) Applicant: Fundación Tekniker, 20600 Eibar (Guipuzcoa) (ES)
(72) Inventor: Soriano Reyes, Carlos, 20660 Eibar (ES); Lombarri Villa, Jon, 20660 Eibar (ES)
(74) Representative: Balder IP Law, S.L.

(57) **Abstract**

Examples refer to a method and apparatus for deburring workpieces, the workpieces having at least one surface area with at least one burr to be deburred. The method comprises generating a laser beam from a laser source, which is projected onto the surface area, so as to produce a laser spot on the surface area and generating a relative movement between the surface area and the laser spot along a burr line defined by the at least one burr such that the laser spot is subsequently projected onto different portions of the at least one burr. During said relative movement, the method further comprises repetitively scanning the laser beam so as to project the oscillating laser spot with a two-dimensional pattern over the at least one burr along the burr line.

## Description

### TECHNICAL FIELD

In general, the present invention relates to laser processing of materials. In particular, the present invention refers to a method and apparatus for deburring workpieces by using a laser beam that is projected and oscillated onto the workpieces, wherein the workpieces may have been previously manufactured by any process which generates burrs into the workpieces, such as metal casting, forging or oxy cutting manufacturing processes, among others.

### STATE OF THE ART

Some manufacturing operations generate burrs into the manufactured workpieces due to the manufacturing process itself. Forging manufacturing operations, oxy cutting manufacturing operations and metal casting operations, such as gravity casting, high-pressure die-casting, lost-foam and lost-wax casting and sand casting, may require a trimming or deflashing operation followed by a finishing deburring step in order to eliminate the excess material and burrs generated during the manufacturing process.

For example, in metal casting manufacturing processes, filling and solidification of the molten metal inside the mould may generate some burrs into the resulting workpiece. In such case, the excess material to be removed is normally located alongside the closure line of the mould and at the connection points between the channels through which the liquid flows and the cavity of the mould itself. After die trimming, different type of burrs can appear depending on their cause (ejector clearances, holes not completely trimmed, thermal fatigue cracks in the die, split lines, etc.). Burrs can appear both at the edges of the workpiece and at places located out of edges, and may have different geometries, thicknesses or lengths.

Regarding trimming and deburring operations, the use of cutting presses is common for cutting sharp edges, burrs or even thicker parts as sprues and runners generated on the workpiece. This may imply using expensive tooling systems, since cutting dies and tools have to be manufactured specifically for each particular workpiece geometry. Sometimes, given the complexity of the workpiece, the cutting is imprecise and generates unwanted geometric deviations, especially as the tools wear down. Undesired heat affected zones can be another by-product of the cutting processes. As a result, it is necessary to add new operations like inspection, review and manual deburring with saws and/or abrasive tools, which implies an extra cost in the production process.

Moreover, depending on the geometry of the workpiece, there can be burrs that are not accessible to the cutting die. In these cases, an extra operation is needed to finish the workpiece. Even though robotized milling is common in modern facilities, manual deburring is still present in most production lines. Due to this manual work, repeatability of the resulting workpieces can be affected as well as the overall efficiency and throughput of the production line. Besides this, a defective deburring process can induce difficulties during the workpiece assembly process or even failure during service.

Prior art documents CN106862775 A, CN104289815 A and US2015014289 A1 describe different approaches for laser deburring methods and apparatuses which are expensive, time-consuming and whose configuration does not allow them to be adaptable to workpieces with different shapes and geometries.

The mentioned issues associated to the workpiece deburring operations severely affect the quality of the resulting product and increases its final cost due to the several processes the workpiece is to be subjected.

### DESCRIPTION OF THE INVENTION

The present invention uses scanning devices, e.g., scanners with scan rates that ranges from approximately 0.1 KHz to 100 KHz, which are able to deflect or project a laser beam into a workpiece, producing an oscillating laser spot and generating two-dimensional (2D) patterns over the burrs of the workpieces in order to remove them. These scanning devices may be galvanometric scanners having galvanometric mirrors, polygon scanners, having polygon mirrors, or even a mirror attached to a piezoelectric device, etc., and may have a scanning speed that may range from 0 to 60.000 rpm or even higher. In this way, the burr lines can be safely and entirely covered by a 2D pattern, generated by the oscillating laser spot, and such aforementioned figures can be swept over all the predefined positions in the workpiece where burrs might be present, independently of the workpiece geometry. As used herein, a "burr line" may refer to the line or trajectory, straight or curved, that substantially covers the union of all segments that connect the different burr portions on the workpiece. This burr line may not be completely coincident with the burr portions themselves but substantially matches the burr portions over their entire length.

A first object of the invention is a method for deburring workpieces, the workpieces having at least one surface area with at least one burr to be deburred. These workpieces may be made of a metal, e.g., iron, aluminum, magnesium, cobalt, copper, lead, nickel, tin, titanium, zinc, etc., polymers, resins, composites, or any combination thereof. Depending on the material the workpiece is made of, and thus the material of the burrs, some of the deburring parameters, such as the wavelength, the scanning speed or the power of the laser source, among others, may vary not to damage the workpiece during the deburring operation. The workpieces may have been previously manufactured by any process which generates burrs into the workpieces, such as metal casting, forging or oxy cutting manufacturing processes, among others. The method comprises projecting a laser beam, generated by a laser source, onto the at least one surface area of the workpiece with the burrs to be deburred, so as to produce a laser spot on the surface area. The method also comprises generating a relative movement between the surface area of the workpiece and the laser beam along a burr line defined by the at least one burr such that the laser spot is subsequently projected onto different portions of the at least one burr. The relative movement between the surface area and the laser beam may be carried out by a fixed deburring head, the deburring head at least comprising the scanning device that scans or oscillates the laser beam, and thus, the laser spot over the workpiece, and a bed, the workpiece is attached to, being movable relative to the head. Alternatively, this relative movement may be performed by the bed being fixed and the head being movable relative to the bed or by having a head and a bed which are movable relative to each other. Therefore, at least one of the head and the bed may be motorized to carry out the relative movement between the surface area of the workpiece and the oscillating laser beam.

During the relative movement between the surface area of the workpiece and the laser source, the method further comprises repetitively scanning (i.e., oscillating) the laser beam so as to project the oscillating laser spot with a 2D pattern over the at least one burr along the burr line. The 2D pattern generated may be contained in a 2D plane that can be defined by two mutually perpendicular directions. This 2D pattern may be obtained by deflecting the laser beam in a succession of straight overlapped segments or trajectories, which can lie along the first direction and in the second direction of the two mutually perpendicular directions, including directions in between these two directions, in other words, directions that are oblique to the first and second directions, in such a way that different trajectories can be generated.

In some embodiments, the spatial power distribution of the laser source may be gaussian. The 2D power distribution of the oscillating laser may be homogeneous. As used herein, the term "2D power distribution" refers to the manner in which the energy or power emitted by the laser beam is distributed over the effective laser spot, for example, during one sweep or oscillation of the beam along the 2D pattern.

In some embodiments, the 2D pattern comprises at least one of: straight or curved trajectories or lines covering the burr line, a set of lines substantially parallel to each other and substantially perpendicular to the burr line, zig-zag lines substantially covering the burr line, wobble lines substantially surrounding the burr line, Lissajous figures substantially over the burr line, ring swept substantially over the burr line or any other pattern that can be contained in such 2D plane.

In some embodiments, a three-dimensional (3D) model, e.g. a CAD model, of the workpiece may be received, said 3D model defining the geometry and surfaces of the workpiece and the geometry and locations of the burrs the workpiece may present. For example, the 3D model may be received by a control unit of the apparatus for deburring workpieces via, e.g., a WiFi, Bluetooth or Ethernet connection, among other communication protocols.

In some other embodiments, the workpiece may be scanned (scanning of the workpiece that is different from the scanning of the laser beam) and a 3D model of the workpiece may be generated based on the results of the scanning. This generated 3D model may define the geometry and surfaces of the workpiece and the geometry and locations of the burrs the workpiece may present. This scanning step may be performed for each one of the workpieces that is going to be deburred or may be performed for one piece and used for the rest of workpieces to be deburred when these workpieces are all identical and have been manufactured by, for example, a repetitive manufacturing process. Due to the wearing of the moulds used for manufacturing the workpieces, the geometry, size and location of the burrs may vary over time. In this case, carrying out the scanning of each one of the workpieces to be deburred may be useful.

The scanning step may be carried out by a 3D scanner, e.g., a structured-light 3D scanner, independent of the apparatus for deburring workpieces wherein the obtained 3D model may be sent to the control unit of the apparatus for deburring workpieces by wireless connections, e.g. GPRS, 3G, 4G, WiFi or Bluetooth connections, etc., or wires, e.g. Ethernet wires. Alternatively, the scanning step may be carried out by a 3D scanner, e.g., a structured-light 3D scanner, coupled to the apparatus for deburring workpieces and that is managed by the control unit of the apparatus, such that the workpiece is firstly scanned by the 3D scanner and then deburred. In such example, the scanning device may be directly coupled to the head of the apparatus for deburring workpieces or may be a device located in proximity to the apparatus and communicatively coupled to the control unit of the apparatus for deburring workpieces.

This 3D model, whether it is received from an external device or generated in situ, may be loaded into the control unit of the apparatus such that, the control unit is able to determine the surfaces on which the burrs are going to be present and the burr lines associated to the predicted burrs based on said 3D model.

In some embodiments, the at least one burr is deburred from the workpiece by re-melting or fusing said burr with the laser source. This laser source may be able to deliver a laser beam with a power, a frequency and emitting pulse durations long enough to melt the burr. By way of example, this laser source may operate in a continuous mode and with long pulse durations (higher than microseconds). In such embodiments, the laser source can be selected from a group comprising: a continuous wave laser source, a millisecond pulsed laser source and a microsecond pulsed laser source, among others.

In some other embodiments, the at least one burr is deburred from the workpiece by ablating the burr with a laser source. This laser source may be able to ablate the burr, i.e. able to provide a laser beam with pulse durations short enough to ablate the burr instead of fusing it. By way of example, this laser source may operate in a non-continuous mode and with short pulse durations (lower than microseconds). In such embodiments, the laser source can be selected from a group comprising: a nanosecond pulsed laser source, a picosecond pulsed laser source and a femtosecond pulsed laser source, among others. In some embodiments, a process gas is projected towards the at least one burr during deburring operation of the burr. The process gas protects the interaction zone between the laser beam and the workpiece and prevents the oxidation of said interaction zone. Besides, this process gas expels the liquid metal and effectively separate the burr from the workpiece when the material is removed by fusion. By way of example, the process gas may be selected from a group comprising argon, helium and nitrogen, among others.

Based on some pre-defined workpiece parameters, such as the workpiece material, the quality requirements of the resulting workpiece, etc., and some parameters related to the workpiece manufacturing process, such as, maximum burr thickness, maximum burr length, etc., the laser source for deburring the workpiece that may be mounted on the apparatus may be selected. For example, for remote deburring by re-melting with or without process gas a continuous wave, mili- or microsecond laser source may be mounted on the apparatus. Alternatively, for remote deburring by ablation with or without process gas a nano-, pico- or femtosecond laser source may be mounted on the apparatus. By way of example, when the burr has a maximum height or a maximum thickness higher than 100 micrometres, a laser source configured to melt the burr could be selected while when the burr has a maximum height or a maximum thickness lower than 100 micrometres, then a laser source configured to ablate the burr may be chosen.

In some embodiments, the deburring operation may be repeated over the at least one burr until complete removal of the at least one burr.

A second object of the invention is an apparatus for deburring a workpiece. The workpiece has at least one surface area with at least one burr to be deburred. The apparatus comprises a laser source configured to generate a laser beam that is to be projected onto the at least one surface area, so as to produce a laser spot on the surface area and means for generating a relative movement between the surface area of the workpiece and the laser beam along a burr line defined by the at least one burr such that the laser spot is subsequently projected onto different portions of the at least one burr. The apparatus further comprises a guiding optical system comprising a scanning device that is configured to, during said relative movement, scan repetitively the laser beam so as to project the oscillating laser spot with a 2D pattern over the at least one burr along the burr line.

In some embodiments, the guiding optical system may comprise the scanning device, a collimation unit and a focusing unit. The scanning device may be a galvanometric scanner having galvanometric mirrors, a polygon scanner having polygon mirrors, or even a piezoelectric scanner having a mirror attached to a piezoelectric device, etc., among others, that is configured to modify the orientation, said orientation being understood as the angle between the normal to the surface and the optical axis (when the mirrors of the scanner point to the centre of the optical field of the scanner) of the laser beam projected onto the workpiece. The scanning device is further configured to generate the figures or patterns to sweep over the burr lines by modifying the orientation of the projected oscillating laser spot.

The laser source may comprise a resonator to generate the laser radiation and a lasing medium that can be an active fibre, YAG, Erbium, CO₂ or diode, among others.

The guiding optical system may comprise an optical fibre or a set of mirrors able to guide the laser beam to the collimation unit formed by collimation lenses to collimate the laser radiation generated in the resonator. In turn, the scanning device orientates the laser beam by means of a number of mirrors, and the focusing unit is formed by at least one focusing lens (e.g., f-theta lens, f-theta + telecentric lens, etc.) to focus the oscillating laser beam onto the workpiece.

In some embodiments, the apparatus comprises means for receiving a 3D model of the workpiece, the 3D model defining the at least one burr on the at least one surface area of the workpiece. The means for receiving the 3D model may be Ethernet connection, WiFi, Bluetooth connection, etc, or any other means for locally or remotely connect the apparatus with the device from which the 3D model is received.

In some other embodiments, the apparatus comprises means for scanning the workpiece and generating a 3D model of the workpiece, the 3D model defining the at least one burr on the at least one surface area of the workpiece. The means for scanning the workpiece may be a 3D scanner, e.g., a structured-light 3D scanner, configured to scan the workpiece and generate a 3D model of the workpiece. This 3D scanner may be integrated into the apparatus or may be an external device communicatively coupled to the apparatus.

In both cases, the apparatus also comprises a control unit, that may be a microprocessor-based system having a memory device in which the 3D model may be stored, wherein the control unit is able to manage the 3D model and to determine the surfaces on which the burrs are going to be present and the burr lines associated to the predicted burrs based on said 3D model.

In some embodiments, the laser source is selected from a group comprising: a continuous wave laser source, a millisecond pulsed laser source and a microsecond pulsed laser source. In such embodiments, the laser source is configured to deburr the at least one burr by re-melting or fusing the at least one burr. For example, the laser source may be configured to operate with a wavelength between 350 and 1500 nm, a power density higher than 0.5 kW/mm² for workpieces made of aluminium alloys, with a beam quality between 0.35 and 4 mm*mrad and with an interaction time higher than 4 ms.

In some other embodiments, the laser source is selected from a group comprising: a nanosecond pulsed laser source, a picosecond pulsed laser source and a femtosecond pulsed laser source. In such embodiments, the laser source is configured to ablate the at least one burr. For example, the laser source may be configured to have pulse durations less than 500 ns, and more preferably between 100 fs and 500 ns, a wavelength between 350 and 1500 nm, an energy per pulse of 0.1-5 mJ and a pulse repetition frequency of 1-100000 kHz.

In some embodiments, the apparatus comprises a nozzle located in proximity to the laser source configured to project a process gas towards the at least one burr during deburring operation. Using this process gas during the deburring operation increases the quality of the resulting workpiece since the process gas protects the interaction zone between the laser source and the workpiece, prevent the oxidation of this interaction zone in the workpiece and expels the liquid metal and effectively separate the burr from the workpiece when the material is removed by fusion. Preferably, this nozzle may be placed after the focusing lens system. The nozzle may have a cone like shape at its end to guide the process gas to the interaction zone and an aperture of at least 5 mm in diameter to provide enough clearance for the deburring 2D patterns.

In some embodiments, the laser source and the guiding optical system comprising the scanning device may be mounted on the head of an articulated arm or a robotic system or Computer Numerical Control (CNC) machine which results in a more flexible solution, since it can move freely to process burrs at different surfaces of the workpiece. In such embodiments, the robot or CNC machine allows positioning the scanning head facing the burr line and reposition it along all the predefined locations where burrs might be present. Thus, the head is able to move relative to the bed the workpiece is coupled to in order to reach with the laser beam all the surfaces of the workpiece.

In some other embodiments, the laser source and the guiding optical system may be coupled to a fixed head of the apparatus and the bed on which the workpiece is coupled may be motorized and have at least 3 degrees of freedom in order to move the piece relative to the fixed head. In such embodiments, the bed moves relative to the head in order to reach with the laser beam all the surfaces of the workpiece.

Alternatively, the head of the apparatus may be the head of a robot or a Computer Numerical Control (CNC) machine with at least 3 axis and the bed may be motorized and have at least 3 degrees of freedom, such that the head and the bed move relative to each other.

In some embodiments, the scanning device is configured to modify the orientation of the laser beam generated by the laser source in order to produce a 2D pattern wherein said 2D pattern comprises at least one of: straight or curved trajectories or lines covering the burr line, a set of lines substantially parallel to each other and substantially perpendicular to the burr line, zig-zag lines substantially covering the burr line, wobble lines substantially surrounding the burr line, Lissajous figures substantially over the burr line, ring swept substantially over the burr line or any other scanning pattern that can be contained in such 2D plane. Preferably, the 2D pattern may be straight or curved trajectories or lines covering the burr line, a set of lines substantially parallel to each other and substantially perpendicular to the burr line or zig-zag lines substantially covering the burr line since they are easier to generate by the scanning device.

The following substantial advantages over prior art methods and devices are among those achieved with the method and apparatus for deburring workpieces herein described: the present invention provides for enhanced flexibility and control of the deburring process, due to the way in which the oscillating laser beam is projected onto the burrs with a 2D pattern. It also saves tooling and labour costs and reduces tool wear when compared with known deburring processes. Besides, it is provided a deburring method that is easy to automate and that enhances repeatability of the deburring process at the same time that simplify the workpieces production process chains.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a perspective view of an example workpiece with some burrs onto it.
Figure 2 shows a perspective view of an example zig-zag or bidirectional pattern over a burr line on a workpiece.
Figure 3 shows different example 2D patterns along the corresponding burr lines.
Figure 4 shows an example apparatus for deburring workpieces.
Figure 5 shows a detailed view of an example deburring head with a nozzle for expelling a process gas

### DETAILED DESCRIPTION OF THE INVENTION

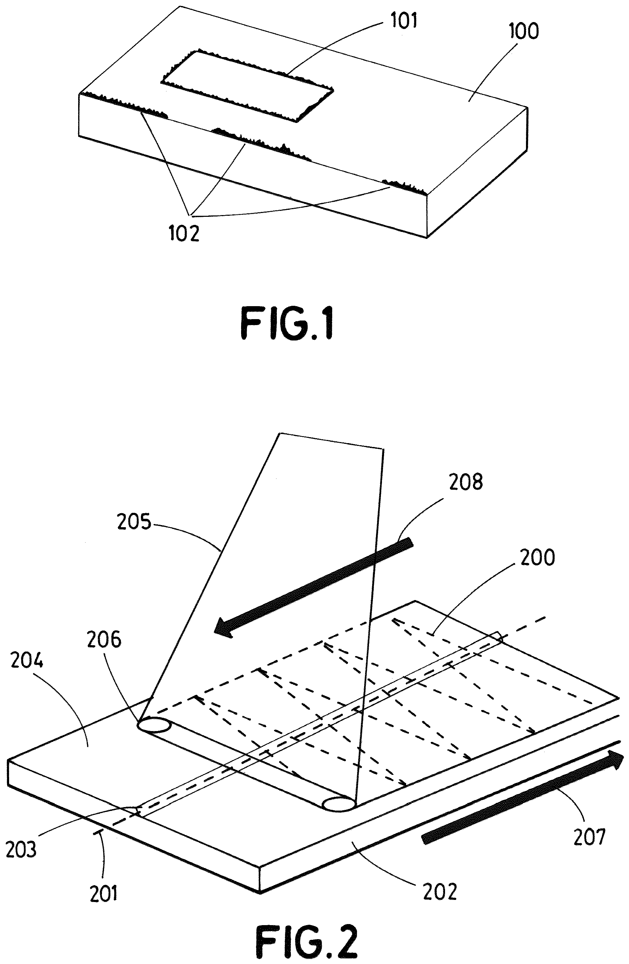

Figure 1 shows a perspective view of an example workpiece 100 with some burrs 101- 102 onto it. The workpiece 100, that has a rectangular block geometry, may have been manufactured by any process which generates burrs 101-102 into the workpiece 100, such as metal casting, forging or oxy cutting manufacturing processes, among others. The workpiece 100 presents out-of-the-edge burrs 101 on its upper surface and edge burrs 102 on one of its long edges.

The burrs 101-102 may have different lengths, thicknesses and geometries. Said burrs 101-102 may be straight lines or curved lines and any combination thereof. For example, the thickness of the burrs 101-102 may be around 0.1-0.5mm.

While the workpiece 100 of Figure 1 has a rectangular block geometry with 6 flat and rectangular surfaces, the workpiece 100 may have any other geometry and any other number of surfaces on which burrs may be present. Moreover, while the workpiece 100 shows that particular burrs 101-102, the workpiece 100 may have any number of burrs with any geometry, thickness and length and in any of its surfaces.

Figure 2 shows a perspective view of an example zig-zag or bidirectional pattern 200 over a burr line 201 on a workpiece 202.

The workpiece 202 is a sheet made of a metal, e.g., iron, aluminum, magnesium, cobalt, copper, lead, nickel, tin, titanium, zinc, etc., or any alloy of these metals. The workpiece may be also made of a polymer, resin, composite material, glass reinforced composite or fiber reinforced composite. The burr line 201 substantially covers the burr 203 on the upper surface 204 of the workpiece 202. While in figure 2 the burr line 201 entirely match the length of the substantially straight burr 203, the burr line 201 does not necessarily have to match the burr in its entirety, especially when said burr has irregular shapes, that is, when the burrs present discontinuities, do not have completely straight geometries or when the geometry of the burr is too complex for the head of the apparatus to completely follow its geometry. In such cases, the control unit of the apparatus for deburring workpieces may perform an interpolation of different points selected from the irregular burr and calculate the burr line that will ensure that the oscillating laser beam with its 2D pattern will pass over the entire burr. The oscillating laser beam 205, generated by the laser source (not shown in this figure) and scanned by the scanner of the guiding optical system (not shown), is projected onto the workpiece 202 as an oscillating laser spot 206.

In such example, the workpiece 202 is moved in a direction 207 that is parallel to the longitudinal axis of the workpiece 200 while the laser source, and thus the head of the apparatus, is fixed. In this way, the laser beam 205 moves over the upper surface 204 of the workpiece 202 in the opposite direction 208 relative to the displacement direction 207 of the workpiece 202. Alternatively, the head may move relative to the workpiece or the head and the workpiece may move relative to each other.

The movement of the workpiece relative to the head of the apparatus, the movement of the head of the apparatus relative to the workpiece or the movement of the workpiece and the head of the apparatus relative to each other will be especially useful when the scanner working field, e.g., 50x50 mm or 100x100 mm, is not big enough to cover the entire burr line. In such cases, the combination of the area covered by the scanner working field with the movement of the apparatus and the workpiece relative to each other ensures that the burr, independently of its location and geometry, will be processed.

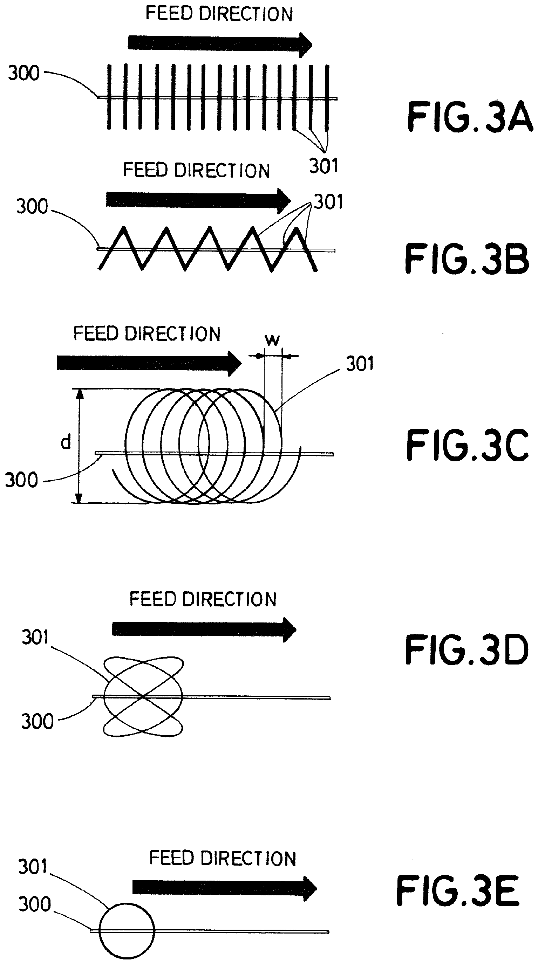

Figures 3A-E show different example 2D patterns along their corresponding burr lines 300.

The displacement of the laser spot, in relation to the interface area, that is the area of interaction of the oscillating laser beam onto the surface of the workpiece, is carried out in accordance with a track that can comprise straight and/or curved portions, and/or portions in one or more planes.

Fig. 3A shows a particular 2D pattern that comprises a plurality of straight lines 301 over the burr line 300, which are equidistant and are arranged substantially parallel with each other. Alternatively, the plurality of lines may be curved lines or a combination of straight and curved lines. Instead of being homogeneously distributed over the burr line 300, said lines 301 may be located at different distances from each other defining a heterogeneous distribution of the lines 301 over the burr line 300. The distance between adjacent lines 301 may depend on the thickness of the burr to be deburred, such that 2D patterns with lower distance between adjacent lines may be used for burrs of grater thickness and vice versa.

Fig. 3B shows a particular zig-zag or bidirectional pattern that comprises a plurality of straight lines 301 over the burr line 300, with two different inclined orientations relative to the burr line 300.

The length of the lines 301 and the inclination od said lines 301 relative to the burr line 300 may depend on the thickness of the burr to be deburred, such that 2D patterns with shorter lines 301 and greater inclination of the lines 301 relative to the burr line 300 may be used for burrs of greater thickness and vice versa.

The 2D patterns shown in figures 3A and 3B may be especially useful for removing thin burrs, e.g., burrs with a height or thickness of less than 100 micrometers.

Fig. 3C shows a particular spiral 2D pattern that comprises one single curved line or a combination of a plurality of curved lines forming a spiral line 301 over the burr line 300.

The oscillation width (w) and the interval between the periodic waves (d) of the spiral line 301 may depend on the thickness of the burr to be deburred, such that 2D patterns with greater oscillation widths and smaller intervals between periodic waves may be used for burrs of grater thickness and vice versa

Fig. 3D shows a particular 2D pattern in the form of a Lissajous figure that comprises one single curved line or a combination of a plurality of curved lines forming the Lissajous figure 301 over the burr line 300.

Fig. 3E shows a particular 2D pattern in the form of a circumference figure that comprises one single curved line or a combination of a plurality of curved lines forming the circumference 301 over the burr line 300.

While Figures 3A-E show five example 2D patterns, the present invention is not limited to such examples. In fact, the method and apparatus for deburring workpieces herein described may use any other 2D pattern that may ensure that the burrs on the workpieces are completely swept by the laser beam projected by the laser source.

The 2D patterns shown in figures 3C-3E may be especially useful for removing burrs with heights of thicknesses higher than 100 micrometers.

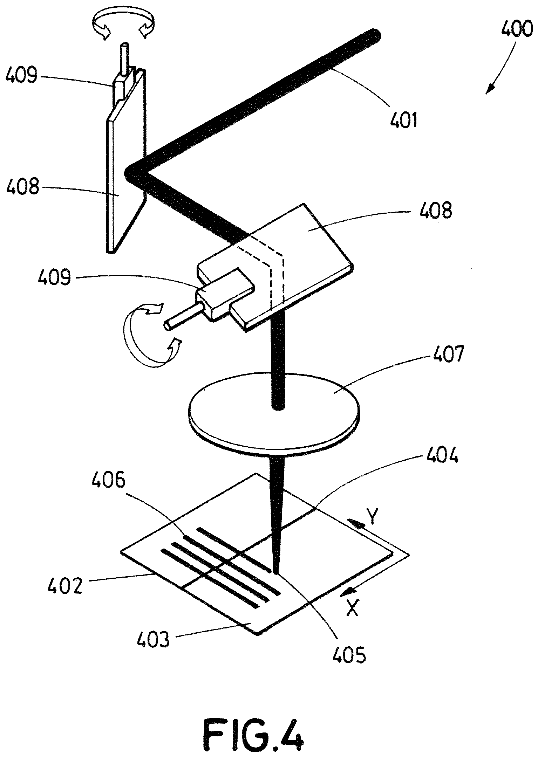

Figure 4 shows an example apparatus 400 for deburring workpieces. It should be understood that the apparatus 400 depicted in Figure 4 may include additional components and that some of the components described herein may be removed and/or modified without departing from a scope of the apparatus 400.

The apparatus 400 comprises a laser source (not shown in this figure) that is configured to generate the laser beam 401 that is projected onto the upper surface 402 of the workpiece 403 to be deburred. The laser source includes a resonator to generate the laser radiation and the lasing medium may be an active fibre, YAG, Erbium, CO₂ or diode, among others. The apparatus 400 further comprises means for generating a relative movement (not shown in this figure) between the workpiece 402 and the laser source along a burr line 404 defined by the burr to be deburred. The means for generating the relative movement may be a motorized bed on which the workpiece 402 is placed or a movable head the apparatus 400 is coupled to. The apparatus 400 further comprises a scanner configured to, during said relative movement, repetitively scanning the laser beam 401 so as to project an oscillating laser spot 405 with a 2D pattern 406 formed by a set of straight and parallel lines over the burr and along the burr line 404.

The 2D pattern 406 projected on the workpiece 402 combined with the relative movement of the workpiece 402 and the laser beam 401 allow the oscillating laser spot 405 to completely cover the burr line 404.

The optical guiding system comprises the scanner and a collimation scan lens 407, e.g., a f-theta lens, to collimate the radiation generated in the resonator of the laser source onto the laser spot 405. The scanner further comprises two independent galvanometric mirrors 408 coupled to two respective galvanometers 409 which are configured to move the galvanometric mirrors 408 to orientate the laser beam 401 in order to generate the 2D pattern 406. The scanner may further comprise focusing lenses, e.g., f-theta lenses, f-theta + telecentric lenses, etc., located in different points of the laser beam path to focus said laser beam 401 towards the next element of the optical guiding system in its way to the workpiece 402.

The apparatus also comprises a control unit (not shown), that may be a microprocessor-based system having a memory device in which the 3D model of the workpiece is stored. Based on said 3D model, the control unit determines the surfaces of the workpiece 402 on which the burrs are going to be present and the burr lines associated to the predicted burrs. This control unit is further configured to manage the means for generating the relative movement between the workpiece 402 and the laser source and to manage the optical guiding system in order to generate the 2D oscillating patter based on the 3D model of the workpiece.

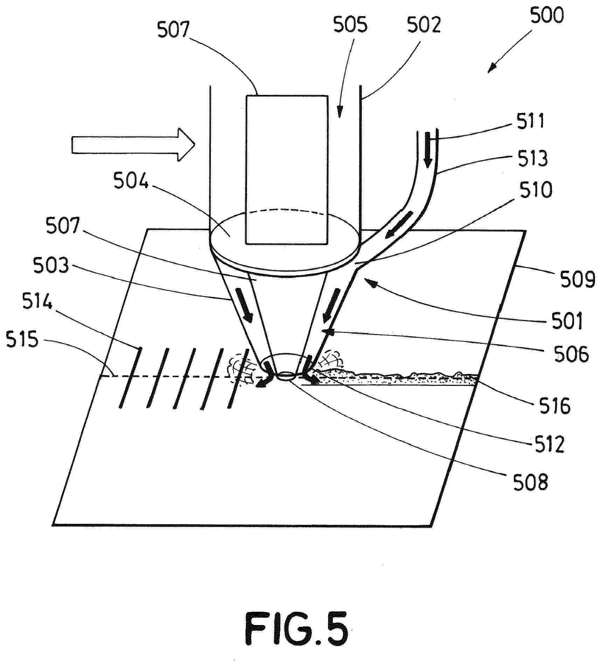

Figure 5 shows a detailed view of an example of a deburring head 500 with a nozzle for expelling a process gas. It should be understood that the head 500 depicted in Figure 5 may include additional components and that some of the components described herein may be removed and/or modified without departing from a scope of the head 500.

The deburring head 500 comprises a nozzle 501 formed by a conical portion 502 and a frustoconical portion 503. A collimation scan lens 504 is located inside the nozzle 501 such that said collimation scan lens 504 separates the inner space 505 defined by the conical portion 502 from the inner space 506 defined by the frustoconical portion 503 of the nozzle 501. The collimation scan lens 504 also narrows the laser beam 507 coming though the conical portion 502 such that the laser beam is focused into a laser spot 508 on the workpiece 509. The frustoconical portion 503 of the nozzle 501 comprises an inlet 510 through which a process gas 511, such as argon, helium or nitrogen, among others, is feed into the inner space 506 of the frustoconical portion 503. Said process gas 511 exits the nozzle 501 through the opening 512 towards the burr 513 during deburring operation. The process gas 511 may be provided from a reservoir (not shown) via the flexible tube 513 into the nozzle 501. The opening 512 has an aperture of at least 5 mm in diameter to provide enough clearance for the oscillating laser beam 507 to perform the 2D pattern 514 along the burr line 515. Using this process gas 511 during the deburring operation increases the quality of the resulting workpiece since the process gas protects the interaction zone between the laser source and the workpiece, prevent its oxidation and expels the liquid metal and effectively separate the burr from the workpiece when the material is removed by fusion.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A method for deburring a workpiece, the workpiece having at least one surface area with at least one burr to be deburred, the method comprising:
projecting a laser beam from a laser source onto the at least one surface area, so as to produce a laser spot on the surface area;
generating a relative movement between the surface area and the laser source along a burr line defined by the at least one burr such that the laser spot is subsequently projected onto different portions of the at least one burr; and
during said relative movement, repetitively scanning the laser beam so as to project the oscillating laser spot with a two-dimensional pattern over the at least one burr along the burr line.

2. The method according to claim 1, comprising:
receiving a 3D model of the workpiece, the 3D model defining the at least one burr on the at least one surface area of the workpiece; or
scanning the workpiece and generating a 3D model of the workpiece, the 3D model defining the burr lines on the at least one surface area of the workpiece.

3. The method according to any one of the preceding claims, comprising deburring the at least one burr by re-melting the at least one burr, with the laser source being selected from a group comprising: a continuous wave laser source, a millisecond pulsed laser source and a microsecond pulsed laser source.

4. The method according to any of claims 1 or 2, comprising deburring the at least one burr by ablating the at least one burr, with the laser source being selected from a group comprising: a nanosecond pulsed laser source, a picosecond pulsed laser source and a femtosecond pulsed laser pulse.

5. The method according to claim 3 or 4, comprising projecting a process gas towards the at least one burr during deburring operation of the at least one burr.

6. The method according to claim 1, wherein the two-dimensional pattern comprises at least one of:
a set of lines substantially parallel to each other and substantially perpendicular to the burr line;
zig-zag lines substantially covering the burr line;
a wobble line substantially over the burr line;
a Lissajous figure substantially over the burr line; and
a ring swept substantially over the burr line.

7. The method according to any one of the preceding claims, comprising repeating the deburring operation over the at least one burr until complete removal of the at least one burr.

8. An apparatus for deburring a workpiece, the workpiece having at least one surface area with at least one burr to be deburred, the apparatus comprising:
a laser source configured to generate a laser beam that is projected onto the at least one surface area, so as to produce a laser spot on the surface area;
means for generating a relative movement between the surface area and the laser source along a burr line defined by the at least one burr such that the laser spot is subsequently projected onto different portions of the at least one burr; and
a guiding optical system comprising a scanning device that is configured to, during said relative movement, repetitively scanning the laser beam so as to project the oscillating laser spot with a two-dimensional pattern over the at least one burr along the burr line.

9. The apparatus according to claim 8, wherein the guiding optical system comprises the scanning device, a collimating unit and a focusing unit.

10. The apparatus according to claim 8, wherein the scanning device is a scanner selected form a group comprising galvanometric scanners, piezo electrical scanners and polygonal scanners.

11. The apparatus according to any one of the preceding claims, comprising:
means for receiving a 3D model of the workpiece, the 3D model defining the at least one burr on the at least one surface area of the workpiece; or
means for scanning the workpiece and generating a 3D model of the workpiece, the 3D model defining the burr lines on the at least one surface area of the workpiece.

12. The apparatus according to any one of the preceding claims, wherein the laser source is selected from a group comprising: a continuous wave laser source, a millisecond pulsed laser source and a microsecond pulsed laser source, and the laser source is configured to deburr the at least one burr by re-melting the at least one burr.

13. The apparatus according to any one of the preceding claims 8-12, wherein the laser source is selected from a group comprising: a nanosecond pulsed laser source, a picosecond pulsed laser source and a femtosecond pulsed laser source, and the laser source is configured to ablate the at least one burr.

14. The apparatus according to any one of the preceding claims, comprising a nozzle located in proximity to the laser source, the nozzle being configured to project a process gas towards the at least one burr during deburring operation.

15. The apparatus according to any one of the preceding claims, wherein the two-dimensional pattern comprises at least one of:
a set of lines substantially parallel to each other and substantially perpendicular to the burr line;
zig-zag lines substantially covering the burr line;
a wobble line substantially over the burr line;
a Lissajous figure substantially over the burr line; and
a ring swept substantially over the burr line.
